# EUROPÄISCHE PATENTANMELDUNG

(11) **EP 3 708 970 A1**
(43) Veröffentlichungstag der Anmeldung: **16.09.2020**
(21) Anmeldenummer: 20160019.4
(22) Anmeldetag: 28.02.2020
(51) Int. Cl.: G01D 11/24, G01D 5/244, G01B 21/22, G01D 5/26

(54) **DREHGEBER**

(30) Priorität: 12.03.2019 DE 102019106288
(71) Anmelder: SICK Stegmann GmbH, 78166 Donaueschingen (DE)
(72) Erfinder: Hartlieb, Rolf, 78050 Villingen-Schwenningen (DE); Haupt, Jarrod, Minneapolis, MN, 55438 (US)
(74) Vertreter: Hehl, Ulrich

(57) **Zusammenfassung**

Es wird ein Drehgeber (10) zur Bestimmung einer Winkelstellung angegeben, wobei der Drehgeber (10) eine Welle (14, 16), die in einem Übergangsbereich (32) aus einem Gehäuse (18) nach außen ragt, eine mit der Welle (14) verbundene Maßverkörperung (20), einen Sensor (22) zur Erfassung der Maßverkörperung (20) und eine Steuer- und Auswertungseinheit (28) zum Erzeugen eines Winkelsignals in Abhängigkeit von der Drehstellung der Maßverkörperung (20) aus den Signalen des Sensors (22) aufweist. Dabei ist im Übergangsbereich (32) eine Schutzkappe (34) zum Schutz vor mit Druck auf den Übergangsbereich (32) gerichteten Fluiden (12) angeordnet.

## Beschreibung

Die Erfindung betrifft einen Drehgeber nach dem Oberbegriff von Anspruch 1.

Drehgeber oder Drehwinkelsensoren dienen der Erfassung eines Drehwinkels beispielsweise einer Welle. Dabei wird jeweils eine Maßverkörperung abgetastet, die üblicherweise an der Welle mitdrehend angebracht und deren Winkelstellung somit gesucht ist. Die Maßverkörperung erzeugt über die Relativbewegung eine Intensitätsmodulation, die als Winkelsignal genutzt wird.

Es sind Drehgeber mit verschiedensten Sensorprinzipien bekannt. Optische Drehgeber verwenden eine Codescheibe, die das Signal eines Lichtsenders moduliert, so dass ein in Transmission oder Reflexion angeordneter Lichtempfänger ein Winkelsignal empfängt. Eine andere Variante eines optischen Drehgebers ist der Polarisationsencoder. In einem magnetischen Drehgeber wird die Drehbewegung eines Permanentmagneten beziehungsweise von dessen Magnetfeld mit einem Hallsensor detektiert. Auch etwa unüblichere Sensorformen sind denkbar, wie ein magnetooptischer Sensor, der mit dem Faraday-Effekt die magnetische Flussdichte beziehungsweise das Magnetfeld optisch sichtbar macht, womit dann die Drehstellung eines mit der Welle mitdrehenden Magneten bestimmt wird.

In hygienischen Anwendungen, speziell in der Getränke- und Lebensmittelindustrie, wird von den Drehgebern eine hohe Stabilität und Robustheit gefordert. Hier erfolgt regelmäßig eine Reinigung unter Hochdruck ("washdown"). Hierfür sind Dichtigkeitsklassen nach IPx9K normiert. Ein entsprechender Drehgeber muss eine regelmäßige, beispielsweise tägliche Reinigung bei einer Wassertemperatur von mindestens 80° C bei Drücken von 80 bar bis 100 bar aushalten. Dabei können auch Chemikalien etwa zum Fettlösen zum Einsatz kommen. Herkömmliche Drehgeber in entsprechenden Anwendungen fallen daher regelmäßig nach wenigen Monaten aus.

Die Firma Lenord+Bauer bietet unter dem Namen GEL 2010 einen magnetischinkrementalen Drehgeber an, der die Schutzart IP67 erfüllt. Dabei ist eine Dichtung an der Welle vorgesehen. Eine derartige Dichtung reicht aber nicht aus, um das Eindringen von Flüssigkeit bei mehrfacher Reinigung unter hoher Temperatur und hohem Druck zu verhindern. Sobald jedoch Flüssigkeit die Dichtung überwindet, kommt sie irgendwann auch in Kontakt mit der Elektronik, und der Drehgeber funktioniert nicht mehr.

In der EP 1 452 835 A1 wird ein Drehgeber beschrieben, der ein Wälzlager mit zwei Lagerringen und einer Dichtung umfasst. Diese Dichtung ist aber nur gegen Wettereinflüsse gedacht und gegenüber einer in hygienischer Anwendung üblichen Reinigung nicht beständig.

Die US 5 969 518 A1 befasst sich mit einer Vorrichtung zur Messung von Drehgeschwindigkeiten. Dabei schließt eine Dichtung die Seite eines Lagers für zwei gegeneinander rotierende Ringe. Auch diese Dichtung dient nur dem Schutz gegen Umwelteinflüsse und würde einen gerichteten Reinigungsstrahl nicht abhalten.

Die US 2002/0125883 A1 offenbart eine Messvorrichtung mit einem Sensor für ein Wälzlager. Dabei ist der Sensor zwar mit einer Dichtabschirmung montiert. Bei der vorgesehenen Position des Sensors seitlich der Codescheibe ist aber gar nicht die kritische Stelle zum Abdichten eines Drehgebers.

Es ist daher Aufgabe der Erfindung, die Anfälligkeit eines Drehgebers gegenüber äußeren Einflüssen zu verringern.

Diese Aufgabe wird durch einen Drehgeber nach Anspruch 1 gelöst. Der Drehgeber weist eine Welle auf, deren Drehstellung bestimmt werden soll. Die Welle ragt aus dem Sensor beziehungsweise aus dessen Gehäuse heraus, und der Bereich, wo die Welle den Drehgeber verlässt, wird als Übergangsbereich bezeichnet. Eine Maßverkörperung rotiert mit der Welle, und die Maßverkörperung wiederum wird von einem Sensor abgetastet. Durch Auswertung der Sensorsignale wird die gewünschte Drehstellung gewonnen. Dabei kommt es erfindungsgemäß auf das konkrete Messprinzip nicht an, also die Ausprägung der Maßverkörperung und des Sensors als irgendeine an sich bekannte Lösung, von denen einleitend einige beispielhaft genannt sind.

Die Erfindung geht von dem Grundgedanken aus, die Schwachstelle des Drehgebers gegenüber einem Reinigungsstrahl zusätzlich abzudichten, nämlich den Übergangsbereich, wo die Welle aus dem Drehgeber herausragt. In dem Übergangsbereich wird eine Schutzkappe angebracht. Diese Schutzkappe hält einen mit hohem Druck auf den Drehgeber gerichteten Reinigungsstrahl oder sonstige auf den Übergangsbereich gerichtete Fluide und Medien auf. Das Fluid kann sich dann möglicherweise im Übergangsbereich noch ansammeln, aber der gerichtete Reinigungsstrahl ist gebrochen. Ein drucklos auf dem Drehgeber verbleibendes Fluid, wie ein Feuchtigkeitsfilm, dringt nicht mehr in den Drehgeber ein, zumindest sind dagegen einfache Zusatzmaßnahmen möglich.

Die Erfindung hat den Vorteil, dass der Drehgeber auch die harschen Bedingungen einer im Hygienebereich üblichen Reinigung ("washdown") langfristig und ohne Funktionsausfall aushält. Der Drehgeber wird damit zu einem hygienetauglichen Drehgeber ("washdown encoder"), und es ist möglich, Dichtigkeitsklassen IPx9P einzuhalten. Dabei kann die Schutzkappe mit ausgesprochen geringen Kosten hergestellt und am Übergangsbereich angeordnet sowie für verschiedene Wellendurchmesser angepasst werden.

Die Schutzkappe ist bevorzugt aus druckbeständigem Material hergestellt. Die Schutzkappe soll einem Reinigungsstrahl aus Wasser oder sonstigem Reinigungsmedium mit hohem Druck und hoher Temperatur standhalten. Dazu eignen sich Metall, insbesondere Edelstahl, und bestimmte Kunststoffe. Ein typisches Dichtmaterial wie weicher Kunststoff erfüllt die Anforderungen der Schutzkappe dagegen nicht.

Unterhalb der Schutzkappe ist vorzugsweise eine Dichtung angeordnet. Unterhalb bedeutet hier, dass die Schutzkappe auch die Dichtung vor dem Reinigungsstrahl schützt. Die Dichtung befindet sich demnach zwischen Schutzkappe und übrigem Drehgeber. Die Dichtung ist dem Reinigungsstrahl nicht ausgesetzt und muss dessen Druck nicht abfangen. Ein noch denkbares einfaches Ansammeln von Flüssigkeit auf der Dichtung ist unproblematisch, das kann die Dichtung leicht von dem Inneren des Drehgebers fernhalten.

Die Dichtung ist bevorzugt um die Welle herum angeordnet. Beispielsweise ist eine ringförmige Dichtung konzentrisch um die Welle herumgelegt.

Auch die Schutzkappe ist bevorzugt um die Welle herum angeordnet. Sie bildet dann ebenfalls in grober geometrischer Beschreibung einen Ring, hat aber vorzugsweise mehr Struktur, wie nachfolgend noch beschrieben. Die Anordnung von Dichtung und/oder Schutzkappe um die Welle herum deckt alle denkbaren seitlichen Eindringbereiche ab.

Die Schutzkappe bildet bevorzugt eine Verlängerung der Welle. Eine Schutzkappe in dieser Ausführungsform sitzt wie eine Art Hut auf der Welle und umschließt den oben aus dem Drehgeber herausragenden Teil der Welle. Der zentrale Teil der Schutzkappe fungiert als Teil der Welle, um den herausragenden Teil der Welle in Länge und/oder Durchmesser an Anschlussforderungen der Anwendungen des Drehgebers anzupassen.

Vorzugsweise ist die Schutzkappe in Presspassung an der Welle angeordnet. Damit ist der Zwischenraum zwischen Schutzkappe und Welle zumindest nahezu dicht. Etwaig noch verbleibende Undichtigkeiten würden Flüssigkeit allenfalls noch in einem Kriechvorgang und damit gänzlich ohne Druck eindringen lassen. Eine Dichtung unterhalb der Schutzkappe verhindert dann das weitere Vordringen ins Sensorinnere.

Die Schutzkappe weist bevorzugt an ihrem Außenumfang einen seitlichen Überstand auf. Dieser seitliche Überstand umschließt vorzugsweise einen entsprechenden Gehäusebereich des Drehgebers, der üblicherweise ein zylinderförmiges Gehäuse aufweist. Der seitliche Überstand vergrößert die Berührungsfläche zwischen Schutzkappe und Gehäuse. Auf direktem Weg kann ohnehin dank der Schutzkappe keine Flüssigkeit in den Drehgeber eindringen. Durch den seitlichen Überstand wird aber auch der indirekte Weg weiter verlängert und der Druck, unter dem Flüssigkeit eine Dichtung unter der Schutzkappe womöglich noch erreicht, wird weiter vermindert.

Die Schutzkappe weist bevorzugt an ihrem Innenumfang einen seitlichen Überstand auf. Dieser Überstand ist das geometrische Gegenstück nun für die innere Berührungsfläche mit der Welle, die vergrößert wird und damit eine verbesserte Dichtigkeit und Druckminderung aufweist.

Der seitliche Überstand ist bevorzugt innen kürzer ausgebildet als außen. Dadurch wird außen der größere zur Verfügung stehende Bereich besser ausgenutzt. Die seitlichen Überstände zeigen vorzugsweise in dieselbe Richtung, parallel zur Welle in Richtung Drehgeber weisend.

Die Schutzkappe weist bevorzugt die Form zweier konzentrischer Zylindermantelabschnitte mit einem Kreisring als verbindende Grundfläche auf. Das ist eine alternative Beschreibung der Geometrie mit seitlichem Überstand der Schutzkappe innen und außen. Der Kreisring ist die eigentliche Schutzkappe, die Zylindermantelabschnitte sorgen für zusätzliche Abdichtung und zusätzlichen Druckschutz an den Berührungsflächen zu Gehäuse und Welle und unterstützen damit die Funktion.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittansicht eines Drehgebers mit Schutzkappe im Austrittsbereich der Welle;
- Fig. 2: eine Ausschnittdarstellung des Austrittsbereichs zur Veranschaulichung des Weges, den Reinigungsflüssigkeit wegen der Schutzkappe nehmen muss, um doch noch in den Drehgeber einzudringen; und
- Fig. 3: eine Schnittansicht einer weiteren Ausführungsform eines Drehgebers mit Schutzkappe, wobei nun die Schutzkappe als Teil der Welle fungiert und diese in Länge und/oder Durchmesser anpasst.

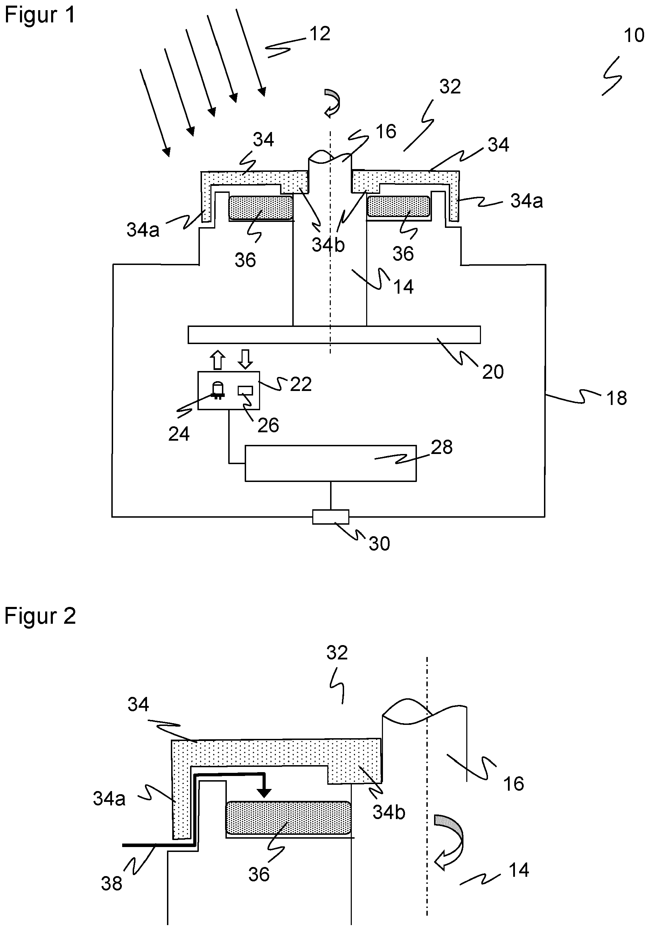

Figur 1 zeigt eine Schnittansicht eines Drehgebers 10 für Hygieneanwendungen beispielsweise der Getränke- oder Lebensmittelindustrie ("washdown encoder"), der beständig auch gegenüber Reinigungsstrahlen 12 hohen Drucks und hoher Temperatur ist. Die Funktion des Drehgebers 10 ist, die jeweilige Drehstellung und/oder Geschwindigkeit der Drehung einer Welle 14 zu bestimmen, von der ein oberer Teil 16 aus dem typischerweise zylindrischen Gehäuse 18 des Drehgebers 10 hinausragt. Der Durchmesser der Welle 14 kann sich zu dem oberen Teil 16 hin sprunghaft verjüngen wie dargestellt oder auch alternativ ein konstanter Durchmesser vorgesehen sein.

In der dargestellten Ausführungsform als optischer Encoder weist der Drehgeber eine Codescheibe 20 auf, die mit der Welle 14 rotiert. Ein Sensor 22 mit Lichtquelle 24 und Lichtempfänger 26 tastet die Codescheibe 20 ab und erzeugt entsprechende Sensorsignale. Eine Steuer- und Auswertungseinheit 28 berechnet aus den Sensorsignalen die gewünschten Winkelsignale und stellt sie an einem Ausgang 30 bereit. Die Darstellung des optischen Encoders ist sehr schematisch und auf wenige Funktionsblöcke beschränkt. Es kommt für die Erfindung nicht darauf an, wie die Winkelmessung des Drehgebers 10 konkret umgesetzt ist. Alternativ sind also jegliche an sich für Drehgeber bekannten Sensorprinzipien vorstellbar, einschließlich der einleitend genannten Beispiele. Es sind absolute wie inkrementale Drehgeber umfasst, und der Drehgeber 10 kann beliebige Schnittstellen und Ausgabeformate aufweisen.

Beim Einsatz in Hygieneanwendungen besteht eine Herausforderung darin, dass gerichtet und auch mit hohem Druck auf den Drehgeber 10 auftreffende Reinigungsstrahlen 12 und vergleichbare äußere Einwirkungen nicht dazu führen dürfen, das etwas in den Drehgeber 10 eindringt und dessen Elektronik beschädigt. Deshalb weist der Drehgeber 10 in einem Übergangsbereich 32, wo der obere Teil 16 der Welle 14 aus dem Gehäuse 18 herausragt, eine Schutzkappe 34 auf.

Die Schutzkappe 34 ist aus einem beständigen, druckfesten Material wie Edelstahl, einem anderen Metall oder einem entsprechend robusten Kunststoff hergestellt. Sie ist grob ringförmig ausgestaltet und konzentrisch um die Welle 14, 16 angeordnet. Außen im Übergang zum Gehäuse 18 sowie innen im Übergang zur Welle 14, 16 weist die Schutzkappe jeweils einen seitlichen Überstand 34a-b auf. Dadurch entsteht eine Geometrie der Schutzkappe 34, die zwei konzentrische Zylindermantelabschnitte mit einer verbindenden, kreisringförmigen Grund- oder angesichts Figur 1 auch Deckfläche aufweist. Mit dem inneren seitlichen Überstand 34b ist die Schutzkappe 34 in Presspassung an der Welle 14, 16 angebracht, was für einen zusätzlichen Dichteffekt sorgt.

Vorzugsweise befindet sich unterhalb der Schutzkappe 34 noch eine zusätzliche Dichtung 36, die beispielsweise als Dichtring konzentrisch um die Welle 14 ausgebildet ist. Die Dichtung 36 soll Flüssigkeit aus dem Drehgeber 10 fernhalten, die ihren Weg noch durch die Schutzkappe 34 gefunden hat.

Figur 2 zeigt eine Ausschnittdarstellung des Übergangsbereichs 32, um den Weg 38 zu illustrieren, den etwaig noch eindringende Flüssigkeit durch die Wirkung der Schutzkappe 34 nehmen muss, um überhaupt noch zu der Dichtung 36 vorzudringen. Es ist ersichtlich, dass sämtliche direkten Pfade von der Schutzkappe 34 versperrt sind. Der mehrfach geknickte womöglich verbleibende Weg 38 unter der Schutzkappe 34 sorgt dafür, dass Flüssigkeit sich allenfalls noch in geringfügigem Maß und praktisch drucklos oder jedenfalls mit deutlich vermindertem Druck auf der Dichtung 36 sammeln kann. Gegen einen solchen Flüssigkeitsfilm kann die Dichtung 36 den Drehgeber 10 wirksam abdichten.

Mit der vorgestellten Bauform eines Drehgebers 10 und durch die Schutzwirkung der Schutzkappe 34 kann ein Design gemäß Schutzklasse IPx9K erreicht werden. In Tests bleibt der Drehgeber 10 auch nach zahlreichen Reinigungszyklen unter hohem Druck und bei hoher Temperatur sowie Einsatz von Fettlösern zwischen den Reinigungszyklen voll funktionsfähig.

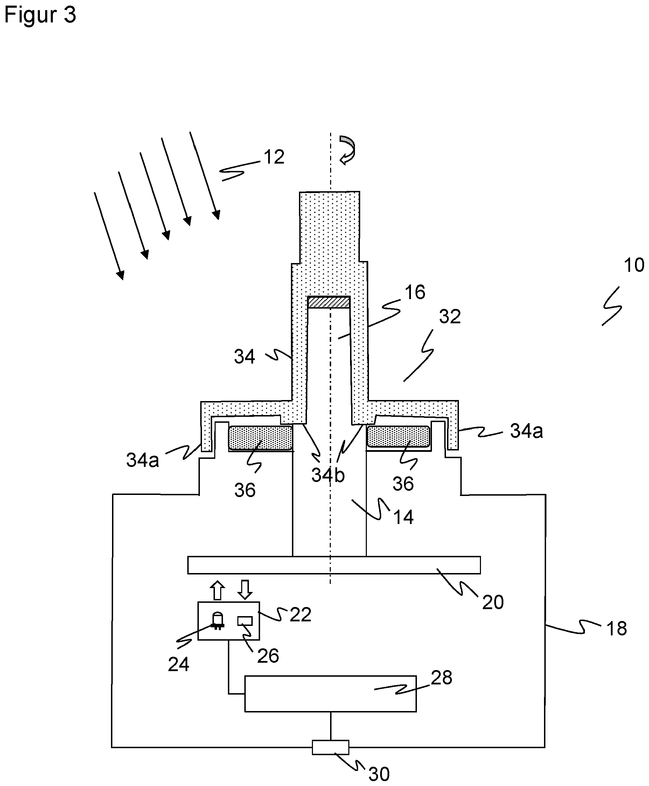

Figur 3 zeigt eine Schnittansicht einer weiteren Ausführungsform eines Drehgebers 10 mit Schutzkappe 34. In den bisherigen Ausführungsformen war die Schutzkappe 34 ringförmig ausgebildet, mit einer zentralen Öffnung, wo die Welle 14 beziehungsweise deren oberer Teil 16 austritt. In Figur 3 nun umschließt die Schutzkappe 34 den oberen Teil der Welle 16 und bildet eine Art Hut mit einem zentralen Vorsprung, der nun selbst als oberer Teil der Welle fungiert. Durch eine derartige Schutzkappe ist zum einen die innere Berührungsfläche zwischen Schutzkappe 34 und Welle 14, 16 vollständig abgedichtet. Außerdem besteht dadurch die Möglichkeit, durch die Schutzkappe 34 auf sehr einfache Weise Varianten des Drehgebers 10 mit unterschiedlichen Längen und/oder Durchmessern von Wellen 14, 16 zu bilden.

## Patentansprüche

1. Drehgeber (10) zur Bestimmung einer Winkelstellung, wobei der Drehgeber (10) eine Welle (14, 16), die in einem Übergangsbereich (32) aus einem Gehäuse (18) nach außen ragt, eine mit der Welle (14) verbundene Maßverkörperung (20), einen Sensor (22) zur Erfassung der Maßverkörperung (20) und eine Steuer- und Auswertungseinheit (28) zum Erzeugen eines Winkelsignals in Abhängigkeit von der Drehstellung der Maßverkörperung (20) aus den Signalen des Sensors (22) aufweist,
**dadurch gekennzeichnet,**
**dass** im Übergangsbereich (32) eine Schutzkappe (34) zum Schutz vor mit Druck auf den Übergangsbereich (32) gerichteten Fluiden (12) angeordnet ist.

2. Drehgeber (10) nach Anspruch 1,
wobei die Schutzkappe (34) aus druckbeständigem Material hergestellt ist.

3. Drehgeber (10) nach Anspruch 1 oder 2,
wobei unterhalb der Schutzkappe (34) eine Dichtung (36) angeordnet ist.

4. Drehgeber (10) nach Anspruch 3,
wobei die Dichtung (36) um die Welle (14, 16) herum angeordnet ist.

5. Drehgeber (10) nach einem der vorhergehenden Ansprüche,
wobei die Schutzkappe (34) um die Welle (14, 16) herum angeordnet ist.

6. Drehgeber (10) nach einem der vorhergehenden Ansprüche,
wobei die Schutzkappe (34) eine Verlängerung der Welle (14, 16) bildet.

7. Drehgeber (10) nach einem der vorhergehenden Ansprüche,
wobei die Schutzkappe (34) in Presspassung an der Welle (14, 16) angeordnet ist.

8. Drehgeber (10) nach einem der vorhergehenden Ansprüche,
wobei die Schutzkappe (34) an ihrem Außenumfang und/oder an ihrem Innenumfang einen seitlichen Überstand (34a-b) aufweist.

9. Drehgeber (10) nach Anspruch 7,
wobei der seitliche Überstand (34a-b) innen kürzer ausgebildet ist als außen.

10. Drehgeber (10) nach einem der vorhergehenden Ansprüche,
wobei die Schutzkappe (34) die Form zweier konzentrischer Zylindermantelabschnitte (34a-b) mit einem Kreisring als verbindende Grundfläche aufweist.
